# EUROPÄISCHE PATENTANMELDUNG

(11) **EP 1 527 677 A1**
(43) Veröffentlichungstag der Anmeldung: **04.05.2005**
(21) Anmeldenummer: 04024594.6
(22) Anmeldetag: 15.10.2004
(51) Int. Cl.: A01G 27/00, A01G 27/06

(54) **Pflanzenbehälter mit integrierter Bewässerungseinrichtung**

(30) Priorität: 28.10.2003 AT 7422003
(71) Anmelder: Kröpfl, Johann, A-8225 Pöllau (AT)
(72) Erfinder: Kröpfl, Johann, A-8225 Pöllau (AT)
(74) Vertreter: Holzer, Walter, Dipl.-Ing.

(57) **Zusammenfassung**

Pflanzenbehälter (1) mit integrierter Bewässerungseinrichtung, für Topf- und Kistenpflanzung sowie für Hydrokulturen, wobei der Pflanzenbehälter doppelwandig ausgebildet und ein dadurch gebildeter Vorratstank (2) luftdicht abgeschlossen und mit einer ebenfalls luftdicht verschließbaren Einfüllöffnung (6) versehen ist, und wobei der Vorratstank (2) über einen absperrbaren Verbindungskanal (7) mit einem mit Flüssigkeit zu versorgenden Boden-Entnahmeraum (8) des Pflanzenbehälters (1) in Flüssigkeitsverbindung steht, der seinerseits über Dochte oder einen perforierten Boden mit dem Inneren des Pflanzenbehälters (1) und mit einem Flüssigkeitsstandanzeiger (3) in Flüssigkeitsverbindung steht.

## Beschreibung

Die Erfindung betrifft einen Pflanzenbehälter mit integrierter Bewässerungseinrichtung für Topf- und Kistenpflanzung sowie für Hydrokulturen.

Hauptsächlich bezieht sich die Erfindung auf den Bereich der Pflanzenhaltung, kann aber auch in Bereichen, wo über einen längeren Zeitraum in einem Gefäß ein gleichmäßig hoher Flüssigkeitsstand gewünscht wird, eingesetzt werden.

Die Bewässerung von Pflanzen, die in Behältern gezogen werden, z.B. von Blumen, erfolgt bisher bei einfachen Blumenkisten und -töpfen zumeist über tägliches Gießen, bei Balkonblumenkisten mit doppeltem Boden und Wasserstandsanzeige etwa alle zwei bis drei Tage und bei Hydrokulturen im Durchschnitt alle fünf bis acht Tage. Eine sehr fortschrittliche Methode stellt das Verlegen eines fix mit dem Wasserversorgungsnetz verbundenen Schlauches mit sogenannten "Tropfern" und einer Schaltuhr dar, die den Wasserzufluß zur eingestellten Zeit öffnet und wieder schließt. Der Nachteil des täglichen Blumengießens ist der große Zeitaufwand. Bei Blumenkästen mit doppeltem Boden ist der Zeitaufwand zwar etwas geringer, aber immer noch groß. Bei der automatischen Bewässerung mit Tropfern besteht die Gefahr, daß zu viel Wasser in die Gefäße gelangt, z.B. bei Regenwetter oder falscher Einstellung der Anlage, und die Pflanzen dadurch Schaden nehmen. Die Düngung muß trotzdem separat vorgenommen werden. Außerdem kommt hier auch schon eine Kosten- und Montagefrage zum Tragen.

Es ist auch bereits ein Pflanzenbehälter mit integrierter Bewässerungseinrichtung für Topf- und Kistenpflanzung sowie für Hydrokulturen bekannt, wobei der Pflanzenbehälter doppelwandig ausgebildet und ein dadurch gebildeter Vorratstank luftdicht abgeschlossen und mit einer ebenfalls luftdicht verschließbaren Einfüllöffnung versehen ist. Auch dieser Behälter gewährleistet keine gleichmäßige Bewässerung über einen längeren Zeitraum.

Die Erfindung zielt darauf ab, die Nachteile der bekannten Pflanzenbehälter zu vermeiden und einen kostengünstigen Pflanzenbehälter mit stets ausreichender Langzeit-Flüssigkeitsversorgung zu schaffen.

Ein erfindungsgemäßer Pflanzenbehälter der vorstehend an gegebnen Art zeichnet sich dadurch aus, daß der Vorratstank über einen absperrbaren Verbindungskanal mit einem mit Flüssigkeit zu versorgenden Boden-Entnahmeraum des Pflanzenbehälters in Flüssigkeitsverbindung steht, der seinerseits über Dochte oder einen perforierten Boden mit dem Inneren des Pflanzenbehälters und mit einem Flüssigkeitsstandanzeiger in Flüssigkeitsverbindung steht.

Der Behälter ist erfindungsgemäß gleichsam mit einer luftdichten Doppelwand versehen, in der ein Flüssigkeitsvorrat, z.B. Wasser- oder Wasser-/Düngemittelvorrat, angelegt werden kann, wobei dieser Flüssigkeitsvorrat automatisch und nur nach Bedarf abgegeben wird. Es braucht keine Installation vorgenommen werden, und die ganze Behälterbetreuung besteht darin, ungefähr dreimal im Monat das Wasser und den Dünger aufzufüllen. Da der Behälter doppelwandig ausgeführt ist, ist die Form der Außenwand in der Gestaltung unabhängig von der Form der Innenwand. Je größer der Größenunterschied zwischen Außen- und Innenwand ist, desto größer ist der Vorratstank.

Durch den im Durchmesser kleinen Verbindungskanal zwischen dem Vorratstank und dem zu bewässernden Boden-Entnahmeraum sowie durch die luftdicht ausgeführte Einfüllöffnung und den luftdicht abschließenden Flüssigkeitsstandanzeiger (der gleichzeitig als Absperrung dient) wird der Flüssigkeitsstand im Entnahmeraum mittels eines sich selbst aufbauenden Vakuum im Vorratsbehälter geregelt. Dadurch kann über einen wesentlich längeren Zeitraum als bisher ein nach Höhe gewünschter Flüssigkeitsstand dem Pflanzenbehälter ohne tägliches Nachfüllen erhalten werden. Dabei ist es egal, welche Witterung herrscht, Hitze/Regen oder auch Verdunstung, oder ob z.B. von den Pflanzen wenig oder viel Flüssigkeit verbraucht wird. Der Flüssigkeitsstand im Pflanzenbehälter ist immer gleich hoch. Dadurch wird gewährleistet, daß die Pflanzen automatisch immer die gleiche Feuchtigkeit in der Erde oder immer gleich hohen Flüssigkeitsstand in der Hydrokultur haben, und immer die gleiche Menge an Dünger vorhanden ist.

Vorzugsweise ist im Rahmen der Erfindung der Flüssigkeitsstandanzeiger verschiebbar in einer vom Entnahmeraum nach oben ragenden Aufnahme angeordnet, welche in den Verbindungskanal mündet, so daß dieser Kanal durch den Flüssigkeitsstandanzeiger verschließbar ist.

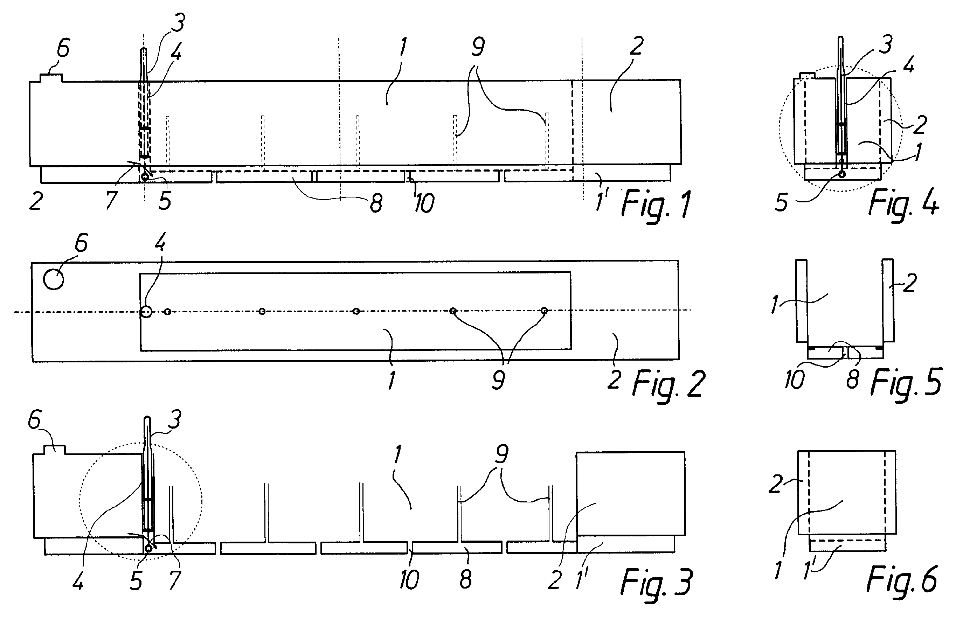

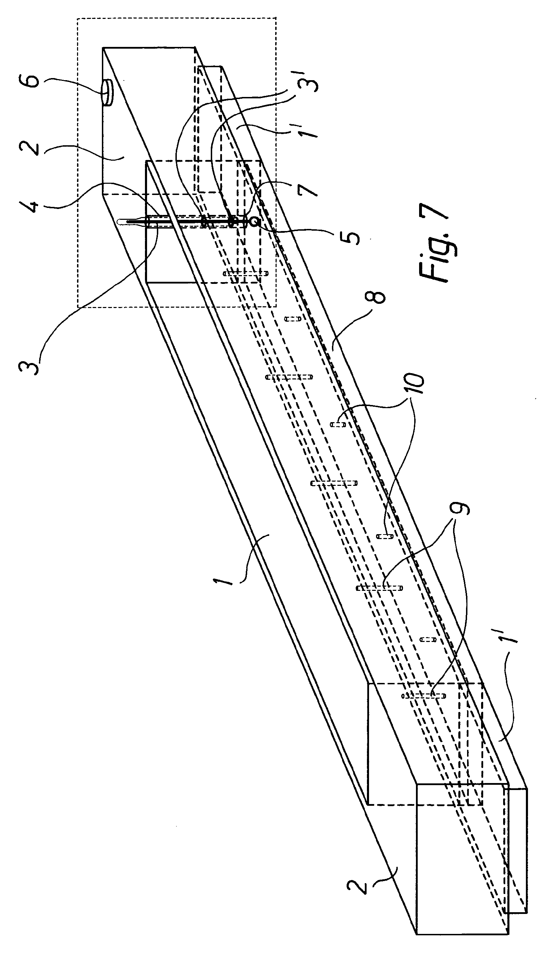

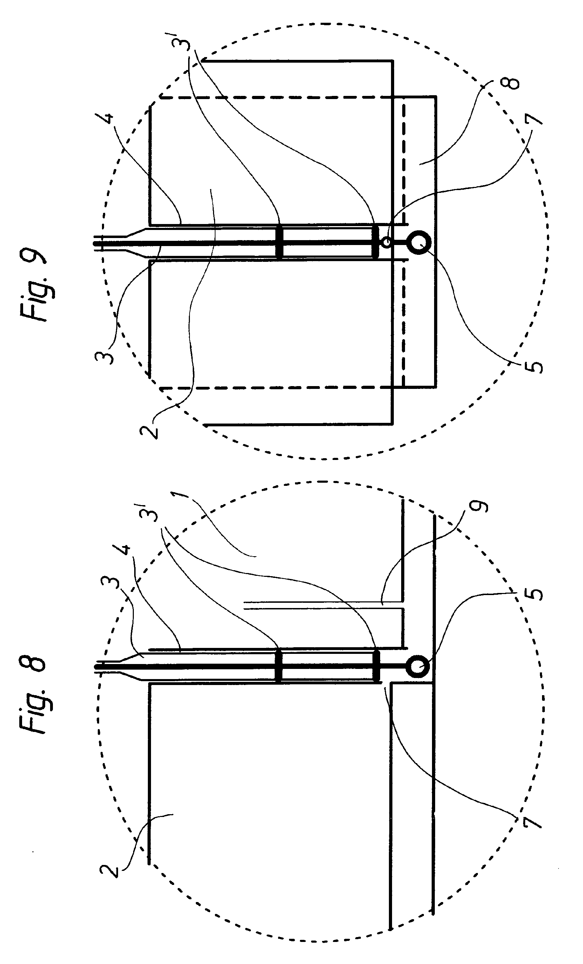

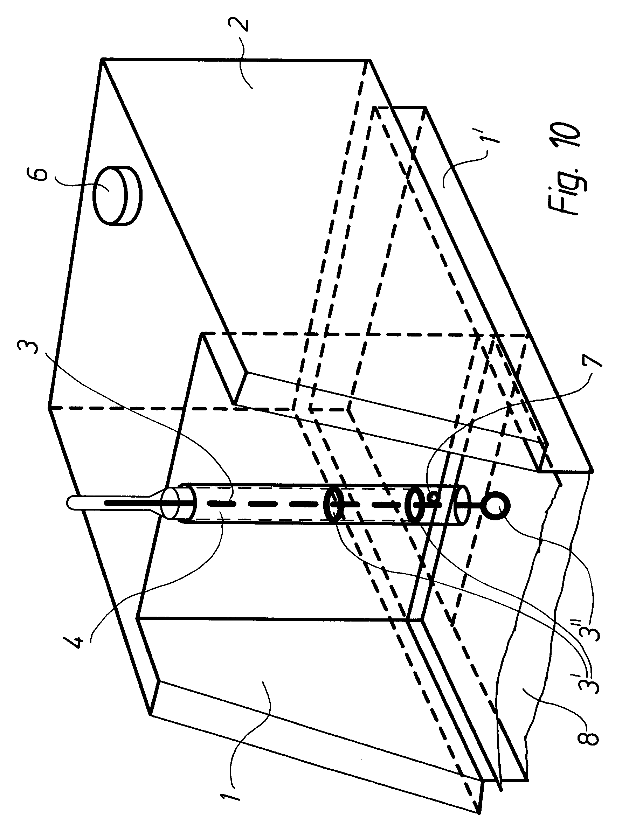

Weitere Merkmale der Erfindung werden nachfolgend an einem Ausführungsbeispiel unter Bezugnahme auf die Zeichnungen näher erläutert. Es zeigen: Fig. 1 eine Seitenansicht eines Balkonblumenbehälters gemäß der Erfindung; Fig. 2 eine Draufsicht des Behälters; Fig. 3 einen Schnitt nach der Linie 4-4 in Fig. 2; Fig. 4 einen Schnitt nach der Linie 1-1 in Fig. 1; Fig. 5 einen Schnitt nach der Linie 2-2 in Fig. 1; Fig. 6 einen Schnitt nach der Linie 3-3 in Fig. 1; Fig. 7 eine Gesamtansicht mit einem Detail B; Fig. 8 ein Detail A/1 aus Fig. 3; Fig. 9 ein Detail A/2 aus Fig. 4; und Fig. 10 das Detail B aus Fig. 7.

Gemäß Fig. 1 ist ein Blumenerde-/Blähtonbehälter 1 zum Einpflanzen von Blumen und anderen Pflanzen mit einem Flüssigkeitsbehälter in Form eines luftdicht ausgeführten Vorratstanks 2 dargestellt, welcher den Behälter 1 umgibt. Der Behälter 1 hat einen Sockel 1'. Ein luftdicht verschließbarer Flüssigkeitsstandanzeiger 3 ist mit zwei Dichtungsringen 3' ausgestattet, die den Raum zwischen einem Aufnahmerohr 4 und dem Flüssigkeitsstandanzeiger 3 abdichten, damit keine unerwünschte Luft in den Vorratstank 2 gelangt. Am unteren Ende des Anzeigers 3 ist ein Schwimmer 5 vorgesehen. Das Aufnahmerohr 4 für den Flüssigkeitsstandanzeiger 3 steht mit einem Verbindungskanal 7 vom Vorratstank 2 zu einem Boden-Flüssigkeitsentnahmeraum 8 in Verbindung. Der Vorratstank 2 ist mit einer luftdicht verschließbaren Einfüllöffnung 6 versehen, damit das Vakuum im Vorratstank 2 erhalten bleibt. Über den vom Vorratstank 2 zu dem Boden-Entnahmeraum 8 führenden Verbindungskanal 7 erfolgt der Wasser-/Luftaustausch. Dochtaufnahmehülsen 9 für die Flüssigkeit aufnehmenden Dochte stehen mit dem Entnahmeraum 8 in Flüssigkeitsverbindung. Von diesem Raum aus werden die Pflanzen mit Flüssigkeit über Dochte versorgt. Über hohle Abstandhalter 10 und einen Überlauf 11 kann überschüssige Flüssigkeit ablaufen. Die Dochtaufnahmehülsen 9 können wahlweise auch durch einen perforierten Zwischenboden ersetzt werden.

Nachfolgend wird die Funktionsweise der Erfindung erläutert. Voraussetzung für die einwandfreie Funktion ist, daß der Vorratstank 2 komplett luftdicht abgeschlossen ist. Ferner ist auch wichtig, daß die beiden O-Ringe 3' auf dem Flüssigkeitsstandanzeiger 3 luftdicht abschließen, damit keine unerwünschte Luft in den Vorratstank 2 gelangt.

Nachdem der Blumenerde- bzw. Blähtonbehälter 1 gefüllt und der Vorratstank 2 noch leer ist, zieht man den Flüssigkeitsstandanzeiger 3 mit den beiden Dichtungsringen 3' im Aufnahmerohr 4 (siehe Detail A/1) nach oben, um den Verbindungskanal 7 zwischen dem Vorratstank 2 und dem Entnahmeraum 8 zu öffnen. Danach füllt man Flüssigkeit, z.B. Wasser, ein, bis der Entnahmeraum 8 zu ca. zwei Drittel gefüllt ist. Dann wird der Flüssigkeitsstandanzeiger 3 wieder soweit hineingeschoben, daß der Verbindungskanal 7 geschlossen und der Vorratstank 2 vom Entnahmeraum 8 getrennt ist.

Anschließend wird der Vorratstank 2 soweit befüllt, daß keine Luft im Tank ist. Sobald die Einfüllöffnung 6 luftdicht verschlossen ist, wird der Flüssigkeitsstandanzeiger 3 wieder soweit herausgezogen, daß der Verbindungskanal 7 zwischen Vorratstank 2 und Entnahmeraum 8 geöffnet ist. Dadurch fließt Flüssigkeit aus dem Vorratstank 2 durch den Verbindungskanal 7 und das Aufnahmerohr 4 in den Entnahmeraum 8, bis das Ende des Verbindungskanals 7 in der Flüssigkeit steht. Da vom Entnahmeraum 8 aus, infolge des dort vorhandenen Flüssigkeitsstandes, keine Luft in den Vorratstank 2 gelangen kann und dieser ansonsten luftdicht ist, fließt infolge der Wirkung des dort entstandenen Vakuums kein Wasser in den Entnahmeraum 8, und das Wasser bleibt im Vorratstank 2.

Da der Flüssigkeitsstand im Entnahmeraum 8 durch Verbrauch oder Verdunstung sinkt, wird der sich bis dahin mit dem Ende in der Flüssigkeit befindliche Verbindungskanal 7 frei und es gelangt Luft in den Vorratstank 2. Dadurch wird das Vakuum im Vorratstank 2 aufgehoben und Flüssigkeit kann solange nachfließen, bis das Ende des Verbindungskanals 7 wieder mit der Flüssigkeit in Verbindung ist. Dadurch kann keine Luft in den Vorratstank 2 gelangen und das sich aufbauende Vakuum stoppt wieder die Flüssigkeitszufuhr.

Somit ist die Flüssigkeitszufuhr bzw. der Flüssigkeitsstand und die Düngung (Düngemittel wird dem Wasser im Vorratstank zugesetzt) über einen längeren Zeitraum automatisch und kontinuierlich gewährleistet, und der Flüssigkeitszulauf ist genau den Bedürfnissen angepaßt. Nicht zu viel, da die überschüssige Flüssigkeit (etwa durch Regen) über die auf der Oberseite offenen Abstandshalter im Entnahmeraum abfließen kann, und nicht zu wenig, da aus dem Vorratstank der Entnahmeraum wieder aufgefüllt wird.

Der Behälter für diese Art von Flüssigkeitsbevorratung und -abgabe, egal zu welchem Verwendungszweck, wird wegen der Gefahr der Algenbildung oder sonstiger Beeinträchtigung der in den Behältern gelagerten Flüssigkeit, z.B. durch Licht, zweckmäßig aus lichtundurchlässigem Material, vorzugsweise PVC, gefertigt.

## Patentansprüche

1. Pflanzenbehälter mit integrierter Bewässerungseinrichtung, für Topf- und Kistenpflanzung sowie für Hydrokulturen, wobei der Pflanzenbehälter doppelwandig ausgebildet und ein dadurch gebildeter Vorratstank luftdicht abgeschlossen und mit einer ebenfalls luftdicht verschließbaren Einfüllöffnung versehen ist, **dadurch gekennzeichnet, daß** der Vorratstank (2) über einen absperrbaren Verbindungskanal (7) mit einem mit Flüssigkeit zu versorgenden Boden-Entnahmeraum (8) des Pflanzenbehälters (1) in Flüssigkeitsverbindung steht, der seinerseits über Dochte oder einen perforierten Boden mit dem Inneren des Pflanzenbehälters (1) und mit einem Flüssigkeitsstandanzeiger (3) in Flüssigkeitsverbindung steht.

2. Pflanzenbehälter nach Anspruch 1, **dadurch gekennzeichnet, daß** der Flüssigkeitsstandanzeiger (3) verschiebbar in einer vom Entnahmeraum (8) nach oben ragenden Aufnahme (4) angeordnet ist, welche in den Verbindungskanal (7) mündet, so daß dieser Kanal durch den Flüssigkeitsstandanzeiger (3) verschließbar ist.

3. Pflanzenbehälter nach Anspruch 2, **dadurch gekennzeichnet, daß** der Flüssigkeitsstandanzeiger (3) in seiner Aufnahme (4) durch beabstandete O-Ringe (3') abdichtend geführt ist.
